# EUROPEAN PATENT APPLICATION

(11) **EP 2 533 404 A1**
(43) Date of publication of application: **12.12.2012**
(21) Application number: 11168878.4
(22) Date of filing: 07.06.2011
(51) Int. Cl.: H02K 9/08, H02K 9/19, H02K 9/22, H02K 1/20, H02K 3/24

(54) **Stator arrangement**

(71) Applicant: SIEMENS AKTIENGESELLSCHAFT, 80333 München (DE)
(72) Inventor: Le Besnerais, Jean, 59370 Mons en Baroeul (FR)

(57) **Abstract**

Stator arrangement (1) for an electrical machine, with a stator (2) having a stator stack (3) comprising a number of adjacently disposed metal plates, with the stator (2) comprising at least one first cooling means for liquid cooling and at least one second cooling means for air cooling of the stator arrangement (1), with the first cooling means comprising at least one cooling pipe (6) and at least one cooling manifold (7) communicating with the cooling pipe (6) and the second cooling means comprising at least one cooling element (13) comprising a number of cooling fins (14), with both the first and second cooling means extending in a common axially closed radial channel (19).

## Description

The invention refers to a stator arrangement for an electrical machine, with a stator having a stator stack comprising a number of adjacently disposed metal plates, with the stator comprising at least one first cooling means for liquid cooling and at least one second cooling means for air cooling of the stator arrangement.

The operation of electrical machines such as generators or the like having a respective stator arrangement is accompanied by heat losses or copper losses respectively. In order to avoid thermal overheating which may lead to lowered efficiency or even to damage or a reduction of lifetime, particularly of insulation life time of the electrical machine, usually cooling means are provided with respective stator arrangements.

A known approach to provide a respective stator arrangement with proper cooling along the entire axial length of the stator stack is the provision of both a liquid cooling means and a gaseous cooling means. Thereby, the liquid cooling means may serve for cooling of the axially inner portions of the stator windings accommodated in respective radially extending stator slots within the stator stack, whereas the gaseous cooling means mainly serves for cooling the respective end or overhang windings axially extending off the stator stack.

In such a manner, it is intended that both the axially inner portions of the stator windings as well as the end or overhang windings are provided with uniform cooling in order to avoid temperature gradients along the stator stack leading to thermal stress.

However, the known cooling means are not satisfying regarding their constructive design as well as their cooling efficiency.

It is the object of the invention to improve a respective stator arrangement particularly in regard of its constructive design and its cooling performance.

This is inventively achieved by a stator arrangement as has been initially described, wherein the first cooling means comprises at least one cooling pipe and at least one cooling manifold communicating with the cooling pipe and the second cooling means comprises at least one cooling element comprising a number of cooling fins, with both the first and second cooling means extending in a common axially closed radial channel.

The present invention provides a novel and highly efficient principle for providing cooling of a respective stator arrangement. Thereby, respective first and second cooling means, with the first cooling means comprising at least one cooling pipe and at least one cooling manifold communicating with the cooling pipe and the second cooling means comprising at least one cooling element comprising a number of cooling fins, are both accommodated within respective radial channels. The radial channels are axially closed, i.e. are defined by axially aligned walls and may be disposed at certain positions along the axial length of the stator stack. Hence, both cooling means are directly located in close proximity or even in direct contact to the stator winding leading to improved thermal exchange and further improved cooling efficiency of the respective first and second cooling means. Hence, a constructively compact, robust and cost-competitive principle for cooling of a respective stator arrangement is presented.

Thereby, the first cooling means mainly serves for cooling of the axially inner portions of the stator windings since the respective cooling pipes follow the course of the respective stator windings within the stator stack, whereas the second cooling means mainly serves for cooling of the respective end or overhang windings axially extending off the stator stack. Hence, it is preferred that respective radial channels are disposed at the respective axial face sides of the stator stack. Alternatively or additionally it is possible that respective radial channels may be provided at certain axial positions within the stator stack.

Generally, the number and concrete location of the respective first and second cooling means depends on the number and location of the respective radial channels within the stator stack since each radial channel is provided with a respective first and second cooling means. The radial channels may be built by means of known spacers or the like.

The first cooling means is based on liquid cooling, whereby a liquid cooling medium such as water or the like circulates from a cooling liquid supply to a respective first cooling manifold deemed as an inlet, through a respective cooling pipe and to a respective second cooling manifold deemed as an outlet and back to the respective cooling liquid supply. In such a manner, a closed cooling circle is attained.

The second cooling means is based on gaseous cooling, whereby a gaseous cooling medium is axially and/or radially circulating along the stator stack particularly in the region of the end or overhang windings. In such a manner, differently shaped end or overhang windings may be provided with proper cooling. The gaseous cooling medium is air or any other suitable cooling gas. Respective fans are included with the stator stack for providing proper circulation of the gaseous cooling medium.

Thus, by individually controlling the respective first and second cooling means an individual are concerted cooling of the stator arrangement is possible.

It is advisable that both the cooling pipes as well as the cooling fins are made of highly thermally conductive materials. Thereby, the use of highly thermally conductive metals such as aluminium, copper or respective alloys are preferred.

It is possible that the second cooling means has a radially outer position in comparison to the first cooling means with respect to the centre axis of the stator arrangement. In such a manner, the cooling efficiency of the second cooling means may be increased since the circulation of the gaseous cooling medium is directed in radially inward direction with respect to the centre axis of the stator arrangement and further through or along the respective cooling fins of the respective cooling element towards the first cooling means having a radially inner position. Of course, in exceptional cases an opposite arrangement of the first and second cooling means is also thinkable.

The radial channel may be axially defined by a radially extending plate and the face side of the stator stack or between two respective metal plates of the stator stack. Hence, the respective components of the stator stack axially defining a respective radial channel may be in the shape of a radially extending plate and a face side of the stator stack in case of the radial channel being located at the respective axial face side of the stator stack or by respective axially adjacently disposed metal plates of the stator stack in case of the radial channel being located at certain axial positions within the stator stack. In either case, the radial channels are axially defined from two sides since each respective radial channel is axially bordered by two plates.

Thereby, the plate may be a finger plate comprising a base body and at least one elongated portion extending in radial outward direction off the base body. The finger plate essentially serves as an end plate and is preferably disposed at a position at the axial face sides of the stator stack. The finger plate may be divided in two portions, i.e. an essentially at least partially circumferentially extending base body and respective elongated portions, i.e. "fingers" extending in radially outward direction off the base body. Thereby, the elongated portions are disposed in the same alignment as the stator teeth of the stator stack, i.e. the elongated portions and the respective stator teeth share the same circumferential position. Additionally, the elongated portions preferably have the same dimensions, i.e. length and width as the respective stator teeth.

In a further embodiment of the invention, the cooling manifold is attached to the radially extending plate. In such a manner, the cooling manifold is easily attachable and detachable from the stator arrangement, whereby in particular a good accessibility to the cooling manifold is given leading to advantages regarding installation, service and repair. Attachment of the cooling manifold may be attained by fixed or detachable connections such as welding, brazing, and adhering or any other stable form and/or force closure.

Concerning the cooling element, it is possible that it is attached to the cooling manifold and/or to the or a radial extending plate and/or to a cooling pipe. Hence, diverse different locations for disposing the cooling element are feasible. In the first alternative, both the cooling manifold and the cooling element may be deemed as an integral part. The connection of the cooling element with the respective components may be attained by respective fixed or detachable connections such as welding, brazing, and adhering or any other stable form and/or force closure.

The cooling element serves as a spacer for building the respective radial channels in a preferred embodiment of the invention. Hence, the cooling element provides proper cooling of the stator arrangement, i.e. particularly the respective end or overhang windings on the one hand, whereas it also maintains a certain axial distance or gap between respective axially adjacently disposed plates, i.e. the aforementioned radial extending plates located at the axial face sides of the stator stack and/or respective axially adjacently disposed metal plates of the stator stack. Hence, the cooling element is a highly integrated component of the inventive stator arrangement in this embodiment.

Regarding the constructive design of the cooling element, it is preferred that it comprises a support frame having the respective cooling fins attached thereto. The support frame provides mechanical stability of the respective cooling element which is especially necessary when the cooling element serves as a respective spacer. Aside, the support frame serves as a mounting point for the respective cooling fins. If need be, both the cooling fins as well as the support frame are provided with corresponding connection means providing a fixed or detachable joint between the cooling fins and the support frame.

The support frame may comprise different shapes, whereby it is preferred that it is built as a double-T beam, whereby the cooling fins axially extend off the web of the double-T beam. Hence, the support frame in the shape of the double-T beam is a mechanically stable component capable of carrying both bending and sheer loads in the plane of the web.

It is of advantage when the cooling fins are arranged in a comb- or concertina-like structure. Generally, a maximum surface is desired regarding the constructive design of the cooling fins giving rise to an increase of the heat exchange and furthers the cooling component of the respective cooling element supporting the cooling fins.

The cooling manifold may have a ring-like shape or a ring-segment-like shape. Generally, the cooling manifold extends in circumferential direction, whereby it may be in the shape of a full ring or a respective ring-segment. In the latter case, a number of circumferentially adjacently disposed cooling may be provided.

Aside, the invention relates to an electrical machine, particularly a generator for a direct drive wind turbine. The electrical machine comprises a stator arrangement as has been described before.

In the following, the invention is explained in detail as reference is made to the figures depicting exemplary embodiments of the invention, whereby:
- fig. 1: shows a longitudinally cut-view of a stator arrangement at a first circumferential position;
- fig. 2: shows a cut-view of fig. 1 along the lines II - II;
- fig. 3: shows a longitudinally cut-view of a stator arrangement at a second circumferential position;
- fig. 4: shows a cut-view of fig. 3 along the lines IV - IV; and
- fig. 5: shows a perspective partial view of a stator arrangement.

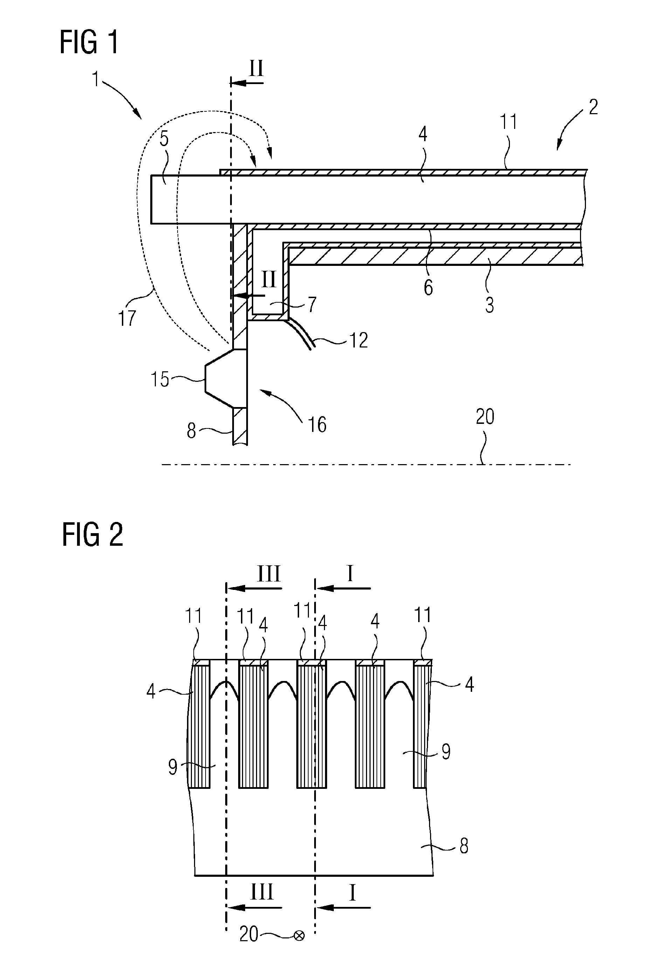

Fig. 1 shows a principle cut-view of an inventive stator arrangement 1 according to an exemplary embodiment of the invention. Fig. 1 shows only the left half of a respective stator arrangement 1, whereby it is clear that the right half is essentially the same since the stator arrangement 1 is a symmetric component. Fig. 2 shows a cut-view of the stator arrangement 1 shown in fig. 1 along the lines II - II, i.e. a frontal view on the face side of the stator arrangement 1.

The stator arrangement 1 comprises a stator 2 usually surrounded by a respective rotor (not shown) as a component of an electrical machine having an outer rotor - inner stator configuration. Yet, the inventive principle is also applicable for outer stator - inner rotor configurations of respective electrical machines. In either case, the stator 2 may be segmented in respective stator segments adapted to build the stator when assembled.

The Stator 2 includes a stator stack 3 comprising a number of axially adjacently disposed metal plates (not shown). The stator 2 further comprises a first cooling means for liquid cooling and a second cooling means for air cooling of the stator arrangement 1 and particularly the respective stator winding 4 as well as the respective overhang windings 5 axially extending off the stator stack 3.

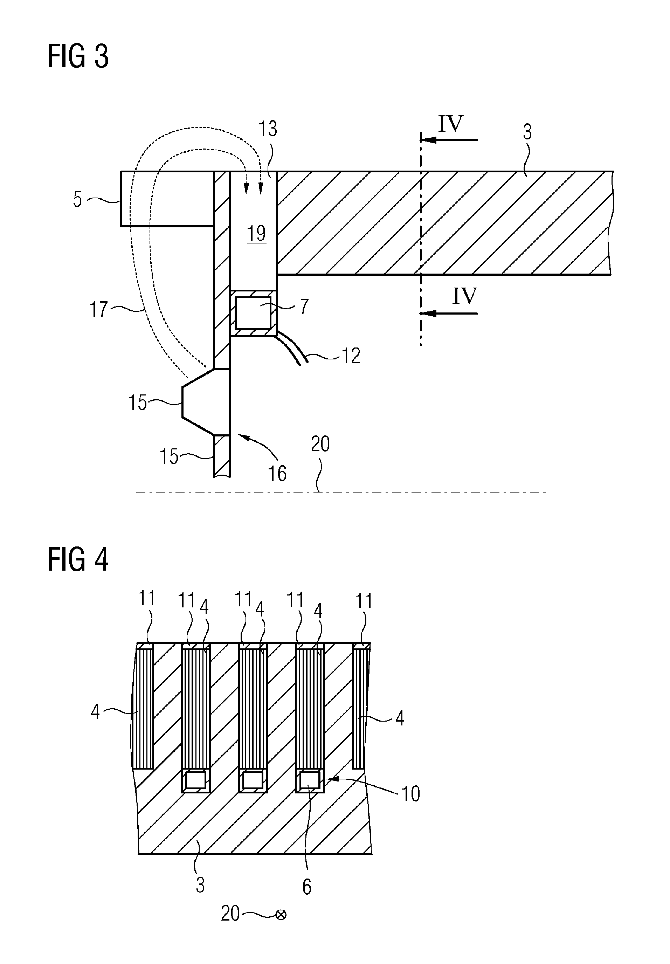

The first cooling means comprises respective axially extending cooling pipes 6 communicating with respective cooling manifolds 7 disposed at an end plate 8 comprising radially outwardly extending finger portion 9. As is discernible, the end plate 8 is disposed at a position at the axial face side of the stator stack 3. The cooling pipes 6 are accommodated at the bottom of respective stator slots 10 (cf. fig. 4). Hence, the cooling pipes 6 mainly serve for cooling the axial inner portions of the stator windings 4. The cooling pipes 6 may be made from a thermally conductive metal such as aluminium or copper for instance.

As is discernible from fig. 4, the stator windings 4 are placed on top of the respective cooling pipes 6, whereby respective wedges 11 close the respective stator slots 10. In known manner, the cooling manifolds 7 are connected to a respective cooling liquid supply (not shown) by means of inlet and/or outlet hoses 12 or other suitable connection means.

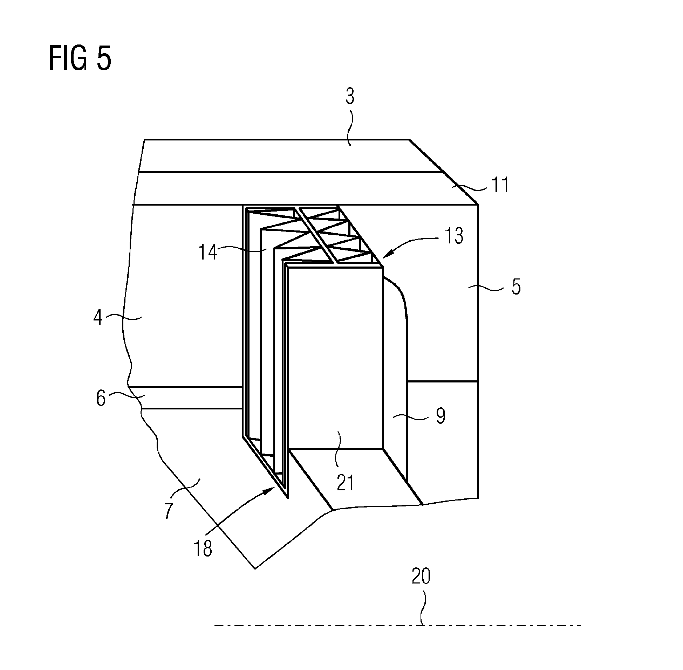

In order to assure proper cooling of the overhang windings 5, the second cooling means comprises a cooling element 13 having a number of axially extending cooling fins 14 (cf. fig. 5). A cooling fan 15 is provided in a respective recess 16 of the end plate 8 so as to provide proper and concerted circulation of a gaseous cooling medium such as air (cf. arrows 17). Thereby, the air flow cooling the overhang windings 6 is not directed through the air gap (not shown) between the stator 2 and the rotor. Hence, an undesired heating of the rotor magnets (not shown) may be avoided.

As depicted in fig. 5, the cooling element 13 comprises a support frame 18 in the shape of a double-T beam, whereby the web of the double-T beam serves as a mounting point for the cooling fins 14. All components of the cooling element 13 are preferably made of thermally conductive material such as aluminium for instance. Fig. 5 also shows that the cooling fins 14 are arranged in a comb- or concertina-like structure having a maximum heat exchange surface.

Fig. 5 further shows that the cooling manifold 7 is provided with a respective recess 18 for accommodating the cooling element 13.

As is discernible from, both the cooling manifold 7 and the cooling element 13 are located in a respective radial channel 19 defined between the radially outer part of the end plate 8 (cf. centre axis 20) and the face side of the stator stack 3. The radial channel 19 may have an axial width of ca. 2 - 6 cm, particularly 3 cm, for instance. Hence, both the first and second cooling means extend in a respective common radial channel 19 with the radial channel 19 having a compact design. In such a manner, a highly effective and highly integrated, yet compact cooling means of the stator arrangement 1, i.e. particularly the stator windings 4 as well as the overhang windings 5 is achieved.

Thereby, as can be particularly seen in fig. 3, the cooling element 13 also serves as a spacer for providing the radial channel 19 since it is axially disposed between the respective end plate 8 and the face side of the stator stack 3.

All in all, the inventive principle allows a separate and individual adjustment of the cooling performance of the first and second cooling means leading to improved cooling properties of the stator arrangement 1 by individually controlling the cooling capability of the first cooling means as well as the second cooling means. Hence, an even temperature distribution along the axial length of the stator arrangement 1 is feasible. Thermal stresses are essentially reduced and due to the reduction of thermal hot spots in the region of the end windings 5, the loss density of the stator arrangement 1 as well as the respective electrical machine comprising the stator arrangement 1 is diminished.

## Claims

1. Stator arrangement (1) for an electrical machine, with a stator (2) having a stator stack (3) comprising a number of adjacently disposed metal plates, with the stator (2) comprising at least one first cooling means for liquid cooling and at least one second cooling means for air cooling of the stator arrangement (1), with the first cooling means comprising at least one cooling pipe (6) and at least one cooling manifold (7) communicating with the cooling pipe (6) and the second cooling means comprising at least one cooling element (13) comprising a number of cooling fins (14), with both the first and second cooling means extending in a common axially closed radial channel (19).

2. Stator arrangement according to claim 1, wherein the second cooling means has a radially outer position in comparison to the first cooling means with respect to the centre axis (20) of the stator arrangement (1).

3. Stator arrangement according to claim 2, wherein the radial channel (19) is axially defined by a radially extending plate (8) and the face side of the stator stack (3) or between two respective metal plates of the stator stack (3).

4. Stator arrangement according to claim 3, wherein the plate (8) is a finger plate comprising a base body and at least one elongated portion (9) extending in radial outward direction off the base body.

5. Stator arrangement according to claim 3 or 4, wherein the cooling manifold (7) is attached to the radially extending plate (8).

6. Stator arrangement according to one of the preceding claims, wherein the cooling element (13) is attached to the cooling manifold (7) and/or to the or a radially extending plate (8) and/or to a cooling pipe (6).

7. Stator arrangement according to one of the preceding claims, wherein the cooling element (13) serves as a spacer for building the respective radial channel (19).

8. Stator arrangement according to one of the preceding claims, wherein the cooling element (13) of the second cooling means comprises a support frame (21) having the cooling fins (14) attached thereto.

9. Stator arrangement according to claim 8, wherein the support frame (21) is built as a double-T beam, whereby the cooling fins (14) axially extend off the web of the double-T beam.

10. Stator arrangement according to one of the preceding claims, wherein the cooling fins (14) are arranged in a comb-or concertina-like structure.

11. Stator arrangement according to one of the preceding claims, wherein the cooling manifold (7) has a ring-like shape or a ring-segment-like shape.

12. Electric machine, particularly a generator for a direct drive wind turbine, comprising a stator arrangement (1) according to one of the preceding claims.
